(19) Europäisches Patentamt / European Patent Office / Office européen des brevets

(11) **EP 2 247 930 B1**

(12) **FASCICULE DE BREVET EUROPEEN**

(45) Date de publication et mention
de la délivrance du brevet:
**06.11.2013 Bulletin 2013/45**

(21) Numéro de dépôt: **09712939.9**

(22) Date de dépôt: **19.02.2009**

(51) Int Cl.:
*G01L 1/10* (2006.01)     *G01L 1/16* (2006.01)
*B60C 23/04* (2006.01)

(86) Numéro de dépôt international:
**PCT/EP2009/051991**

(87) Numéro de publication internationale:
**WO 2009/103769 (27.08.2009 Gazette 2009/35)**

(54) **PROCEDE D'INTERROGATION DE RESONATEUR PIEZOELECTRIQUE ET DISPOSITIF D'INTERROGATION INTEGRANT LE PROCEDE D'INTERROGATION**

VERFAHREN ZUR ABFRAGE EINES PIEZOELEKTRISCHEN RESONATORS UND EIN SOGENANNTES VERFAHREN BEINHALTENDE VORRICHTUNG

METHOD FOR QUERYING A PIEZOELECTRIC RESONATOR AND QUERYING DEVICE IMPLEMENTING SAID QUERYING METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.02.2008 FR 0800967**

(43) Date de publication de la demande:
**10.11.2010 Bulletin 2010/45**

(73) Titulaire: **Senseor**
**06560 Valbonne (FR)**

(72) Inventeur: **FRIEDT, Jean-Michel**
**F-25000 Besancon (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-93/20422          US-A1- 2005 056 098**
**US-A1- 2006 123 913**

**Description**

Le domaine de l'invention est celui des dispositifs d'interrogation de capteur passif et notamment de capteur à ondes acoustiques de surface.

Ces capteurs sont connus pour être utilisés par exemple comme capteur de température ou de pression et comprennent généralement au moins un résonateur comportant une micro-structure déposée à la surface d'un substrat piézoélectrique. Un exemple de capteur peut typiquement comporter deux transducteurs à peignes d'électrodes interdigitées placés entre des réseaux réflecteurs. Les réseaux réflecteurs se comportent comme des miroirs et il existe donc des fréquences de résonance pour lesquelles le trajet retour dans la cavité est égal à un nombre entier de longueurs d'onde. Les modes de résonance pour ces fréquences sont excités par le transducteur placé entre les miroirs.

Ce type de capteur peut être interrogé à distance, en connectant l'entrée du transducteur à une antenne radiofréquence RF. Lorsque l'antenne reçoit un signal électromagnétique, celui-ci donne naissance à des ondes sur la surface du substrat qui sont elles-mêmes reconverties en énergie électromagnétique sur l'antenne. Ainsi, le dispositif constitué d'un ensemble de résonateurs connecté à une antenne a une réponse aux fréquences de résonance des résonateurs qu'il est possible de mesurer à distance. On peut ainsi réaliser des capteurs interrogeables à distance. Cette possibilité est un avantage important des ondes acoustiques de surface et peut être utilisée notamment dans le cadre des capteurs de pression pneumatiques. Il est en effet intéressant dans ce type d'application de pouvoir placer le capteur dans le pneumatique alors que l'électronique d'interrogation est embarquée à bord du véhicule.

Selon l'art connu, des systèmes d'interrogation à distance utilisent des signaux d'interrogation sous forme d'impulsions (typiquement de période environ 25 µs) qui transitent via une antenne émettrice en direction d'une antenne réceptrice connectée au capteur à ondes de surface dénommé ci-après dans la description, capteur SAW.

Une bande de fréquences privilégiée pour ce type de systèmes est la bande ISM, acronyme anglo-saxon signifiant «Industriel, Scientific, Médical » ayant pour fréquence centrale une fréquence de 433 mégaHertz et une largeur de bande de 1,7 mégaHertz.

Il est connu du brevet US 2005/056098, en accord avec les préambules respectifs des revendications 1 et 5, un capteur SAW notamment applicable à la mesure d'une pression de pneumatique sans divulguer de procédé d'identification particulier.

Ils sont également divulgués, des demandes de brevet WO 93/20422 ou US 2006/12913 des procédés d'interrogation de capteurs passifs par interrogation des fréquences de réséonance spécifique.

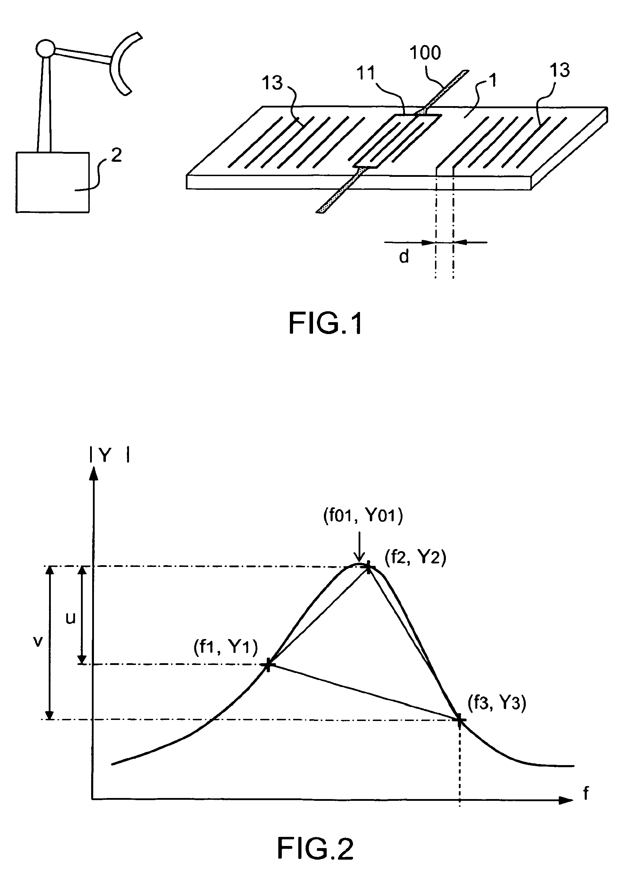

De manière générale un capteur SAW interrogeable à distance et son système d'interrogation peuvent comprendre, comme illustré en figure 1 dans le cas simplifié d'un seul transducteur :

- un système d'interrogation 2 ;
- au moins, un résonateur 1 comportant :

  ○ une antenne 100 ;
  ○ un transducteur à peigne d'électrodes interdigitées 11 et une cavité résonante SAW 13 caractérisée par sa fréquence centrale F et son facteur de qualité Q, correspondant au rapport entre la fréquence centrale et la largeur de bande passante. La cavité 13 comprend deux séries de réflecteurs régulièrement espacés d'une distance d. Le transducteur est connecté à l'antenne 100.

L'interrogateur 2 envoie une impulsion radiofréquence longue pour charger le résonateur 1. A l'arrêt de l'émission, le résonateur se décharge sur sa fréquence de résonance propre avec une constante de temps $\tau$ égale à $Q/\pi F$. Cette décharge du résonateur constitue l'écho en retour détecté par le récepteur de l'interrogateur. Une analyse spectrale permet ensuite de remonter à la fréquence du résonateur qui constitue son identification. Cette analyse peut être effectuée par des algorithmes basés sur la transformation de Fourier, par exemple de type FFT, acronyme anglo-saxon signifiant Fast Fourier Transform. Ce type de traitement par analyse spectrale est particulièrement complexe.

C'est pourquoi la présente invention propose une nouvelle méthode d'interrogation permettant de simplifier et d'alléger le traitement pour identifier une fréquence de résonance. La méthode employée limite le nombre de fréquences interrogées dans une bande de fréquence donnée, nécessaires à identification de la position d'une résonance d'un résonateur interrogé par liaison RF et conduit ainsi à améliorer la vitesse de rafraîchissement de l'information, ou à vitesse de rafraîchissement donnée, permet de limiter les raies successives en dehors de la bande associée à la génération trop rapide d'impulsions radio successives.

Plus précisément l'invention a pour objet un procédé d'interrogation d'un capteur passif comportant au moins un résonateur piézoélectrique ayant une fréquence de résonance caractéristique et comprenant l'interrogation de ladite fréquence de résonance dudit résonateur caractérisé en ce qu'il comporte les étapes suivantes :

- l'identification de la largeur caractéristique de la bande de fréquence de résonance du résonateur $\Delta f_{0S}$ ;

- la détermination d'un pas de balayage égal au tiers de la largeur de bande mesurée $\Delta f = \Delta f_{0S}/3$ ;
- une première série de trois mesures d'interrogation avec des signaux respectivement à une première fréquence $f_1$, à une seconde fréquence $f_2$ et à une troisième fréquence $f_3$ permettant de définir une première valeur de résonance $Y_1$, une seconde valeur $Y_2$ de résonance et une troisième valeur de résonance $Y_3$ ;
- la détermination par une opération de fit parabolique de la courbe de réponse de résonateur à partir desdites première, seconde et troisième valeurs de résonance, de manière à calculer une première valeur de la fréquence en temps réel ($f_{01}$) du résonateur.

Selon une variante de l'invention, la valeur de la fréquence du résonateur est définie par l'équation suivante :

$$f_{01} = f_2 + \Delta f / 2.(Y_1 - Y_3)/(Y_1 + Y_3 - 2Y_2)$$

Selon une variante de l'invention, la première série de mesures d'interrogation est effectuée à trois fréquences telles que les première, seconde et troisième valeurs de résonance définissent un triangle isocèle.

Selon une variante de l'invention, le procédé comprend en outre une seconde étape itérative de mesures d'interrogation à une quatrième fréquence $f_4$, une cinquième fréquence $f_5$ et sixième fréquence $f_6$ définies respectivement par les équations suivantes :

$$f_4 = f_{01} - \Delta f$$

$$f_5 = f_{01}$$

$$f_6 = f_{01} + \Delta f$$

de manière à affiner une seconde valeur de fréquence en temps réel $f_{02}$.

L'invention a aussi pour objet un dispositif électronique d'interrogation d'un capteur passif comportant au moins un résonateur piézoélectrique, ledit dispositif comprenant au moins un premier ensemble de génération de signaux radiofréquences, un second ensemble électronique de traitement de signaux radiofréquences et au moins un capteur passif caractérisé en ce que le second ensemble de traitement de signaux radiofréquences comporte un micro-contrôleur mettant en oeuvre le procédé d'interrogation de l'invention.

Selon une variante de l'invention, le dispositif comporte en outre un convertisseur analogique/numérique.

L'invention a aussi pour objet l'utilisation du dispositif électronique de la présente invention pour l'interrogation d'un capteur passif intégré à un système mis en rotation.

En effet, le procédé d'interrogation de l'invention est particulièrement bien adapté à des capteurs passifs en mouvement car, lorsque le capteur est en mouvement, le temps de vision du capteur par l'antenne de l'interrogateur est bref et l'on cherche particulièrement à diminuer le nombre de mesures.

Selon une variante de l'invention, le capteur passif étant intégré à une roue, le dispositif électronique d'interrogation comprend des moyens pour déterminer la température de la roue à partir de la mesure de la fréquence de résonance en temps réel dudit résonateur.

Selon une variante de l'invention, le capteur passif étant intégré à une roue, le dispositif électronique d'interrogation comprend des moyens pour déterminer la pression de la roue à partir de la mesure de la fréquence de résonance en temps réel dudit résonateur.

L'invention sera mieux comprise et d'autres avantages apparaîtront à la lecture de la description qui va suivre donnée à titre non limitatif et grâce aux figures annexées parmi lesquelles :

- la figure 1 illustre le principe d'interrogation d'un capteur SAW selon l'art connu ;
- la figure 2 illustre les points de mesure réalisés selon une étape du procédé d'interrogation d'un capteur passif, selon l'invention ;
- les figures 3a et 3b illustrent l'écart existant entre la courbe de résonance d'un résonateur en fonction de la fréquence et une approximation parabolique de ladite résonance en fonction de la fréquence ;
- la figure 4 illustre des résultats comparatifs obtenus avec un procédé d'interrogation de l'art connu et le procédé de l'invention dans le cas de l'évolution de la fréquence de résonance en fonction de l'élévation en température dudit résonateur ;
- la figure 5 illustre un exemple de dispositif permettant d'implémenter le procédé d'interrogation à distance de l'invention ;
- la figure 6a présente les mesures brutes des deux résonances d'un capteur de température et la figure 6b fournit la différence entre fréquence de référence et fréquence de mesure, selon que le capteur est en rotation ou à l'arrêt.

De manière générale la présente invention propose un procédé d'interrogation d'un capteur passif comprenant au moins un résonateur dont la fréquence de résonance est caractéristique d'une grandeur physique que l'on cherche à mesurer en temps réel. Il peut s'agir par exemple de grandeur physique telle qu'une température ou une pression.

Selon l'invention, on utilise au moins un résonateur piézoélectrique pouvant avantageusement être un résonateur à ondes acoustiques de surface présentant de part sa conception une largeur de bande de résonance prédéfinie $\Delta f_{0S}$ et constante, et une fréquence de résonance qui elle est susceptible de varier selon l'environnement dans lequel est plongé le capteur et que le présent procédé d'interrogation cherche à mesurer en temps réel.

Pour cela on procède dans un premier temps au travers d'une gamme de fréquences définie pas un pas de $\Delta f = \Delta f_{0S}/3$, à la détermination de trois mesures de coefficient de réflexion du résonateur interrogé conduisant à la détermination de valeurs $Y_1$, $Y_2$ et $Y_3$ respectivement pour des fréquences $f_1$, $f_2$ et $f_3$, dans trois bandes de fréquences de largeur de bande $\Delta f$, lesdites fréquences étant définies de telle sorte que :

$$f_1 - f_2 = f_3 - f_2 = \Delta f$$

et $Y_2 \geq Y_1$ et $Y_2 \geq Y_3$, comme représenté en figure 2.

A partir de ces trois mesures on cherche à déterminer la fréquence $f_{01}$ pour laquelle Y est maximum.

La courbe de dépendance de la résonance Y en fonction de la fréquence est une courbe de type de résonance modélisée par un circuit RLC.

Selon le procédé de l'invention, on approxime cette courbe à une parabole. Ainsi on est amené à considérer que le coefficient de réflexion suit une loi parabolique en fonction de la fréquence f et répond à une équation de type :

$$y = a\,f^2 + b\,f + c\ ;$$

on peut en déduire que :

$$f_{01} = f_2 + \Delta f\,/\,2\ .(\,Y_1 - Y_3\,)\,/(\,Y_1 + Y_3 - 2\,Y_2)$$

Il est à noter que l'équation ci-dessus ne nécessitant qu'une division, une multiplication et trois sommes, son implémentation dans un micro-contrôleur ne faisant que des calculs sur des entiers, ne pose aucune difficulté.

L'incertitude qui en découle sur la position de $f_{01}$ peut être définie comme suit :

$$d(f_{01} - f_2) = \Delta f\,/(\,u + v)^2\ .\,(|v|du + |u|dv)$$

avec $u = Y_1 - Y_2$ et $v = Y_3 - Y_2$
du et dv étant les incertitudes sur ces valeurs associées à leur mesure.

Si on suppose en première approximation que $u \approx v$ et que $du = dv$ est déterminé par la résolution de conversion analogique-numérique ou le bruit du détecteur de puissance radio, alors la formule précédente peut être simplifiée comme suit :

$$d(f_{01} - f_2) \approx du/2\,|u|\ .\ \Delta f$$

En effet on peut constater expérimentalement que compte tenu de la précision de la conversion analogique-numérique, le dernier bit semble significatif et donc la précision de mesure sur u et v est déterminée aujourd'hui par le pas de quantification.

Il apparaît ainsi qu'il convient de définir un bon compromis entre un pas $\Delta f$ suffisamment petit pour fournir une bonne précision en fréquence et garantir que les trois points se trouvent sur le pic de résonance, c'est-à-dire satisfont à la condition suivante : $\Delta f < f_{01} / Q$ avec Q facteur de qualité, tout en maximisant lul puisque du est fixe et imposé par le système de mesure.

Notons que le calcul précédent est basé sur l'hypothèse de la validité d'une approximation parabolique de la résonance, développement de Taylor d'ordre deux qui ne peut être correct que localement autour de la résonance.

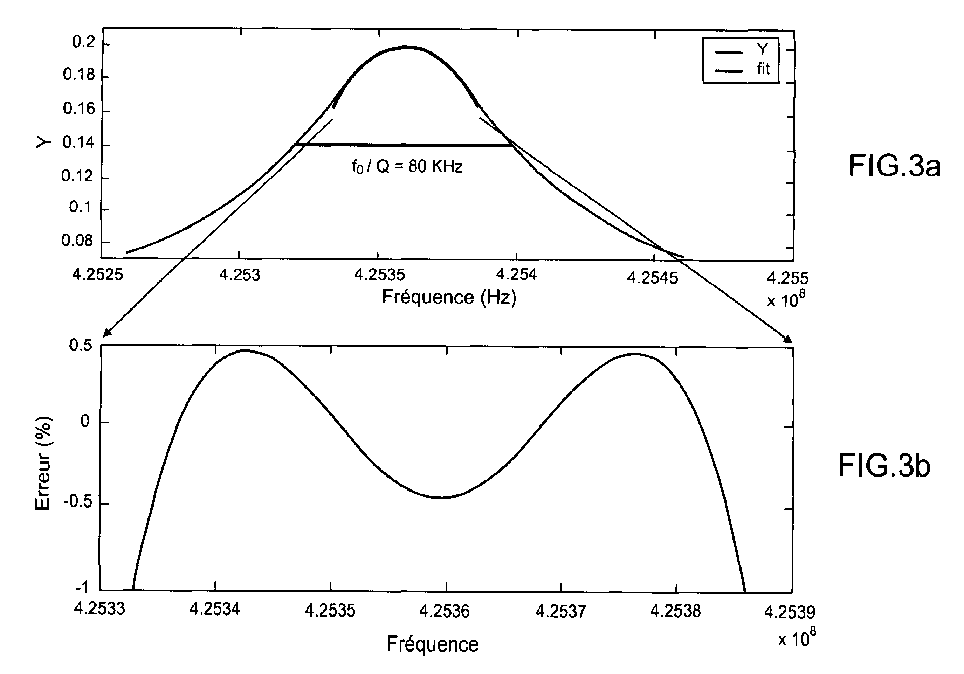

La demanderesse a vérifié que l'écart entre la parabole et la gaussienne dévie de moins de 5 % lorsqu'on se cantonne sur une largeur de $\Delta f_{01}/3$ soit le tiers de la largeur de résonance, autour du sommet de la gaussienne, en considérant que la résonance est modélisée comme une gaussienne d'écart type $\Delta f_{01}$. Cette conclusion est illustrée en figures 3a et 3b, la figure 3b représentant un agrandissement de la bande de fréquence au sommet de la courbe de réponse du circuit réel RLC.

Selon une étape complémentaire du procédé d'interrogation de l'invention, on peut procéder dans un second temps à un affinement de la détermination de la fréquence de résonance en réitérant le processus.

C'est-à-dire que l'on mesure à nouveau trois valeurs de résonance Y à partir cette fois-ci, de la valeur $f_{01}$ complétée de mesures à des fréquences $f_{01} - \Delta f$ et $f_{01} + \Delta f$, afin de déterminer une fréquence de résonance plus précise $f_{02}$, de la même manière par détermination à partir de trois points et d'une approximation parabolique.

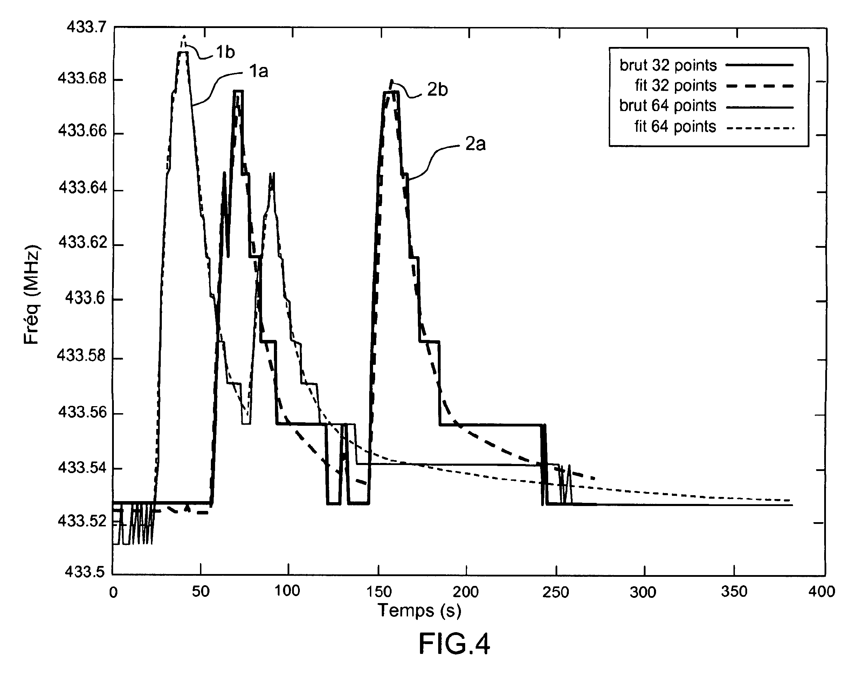

A titre illustratif, des mesures on été effectuées avec des pas de fréquences $\Delta f$ différents d'un même résonateur présentant un facteur de qualité Q de quelques milliers dans une recherche de dépendance en température de la fréquence de résonance d'un résonateur intégré dans un capteur passif. La figure 4 montrent les résultats obtenus et comparatifs entre ceux résultant d'un procédé de l'art connu d'interrogation et ceux résultant du procédé d'interrogation de l'invention. Le procédé de l'art connu comprend le balayage de la bande de fréquence, typiquement la bande ISM par pas de $\Delta_{f0}$ et donc l'ensemble des valeurs de résonance Y obtenues pour l'ensemble des fréquences mesurées. Le procédé de l'invention comprend l'opération de fit parabolique avec un nombre extrêmement restreint de mesures.

Pour mener à bien cette comparaison, un résonateur est chauffé et l'on détermine l'évolution de la fréquence de résonance en fonction de l'évolution temporelle de la température dudit résonateur.

Les courbes 1 a et 2a sont relatives aux mesures obtenues par une simple recherche de maximum suite à un balayage de la bande ISM par pas de $\Delta_{f0}$, les courbes 1 b et 2b sont relatives aux mesures déduites d'une opération de fit parabolique. Il ressort de cette comparaison que l'opération de recherche d'un maximum parabolique conduit à une bien meilleure précision.

En conclusion, le procédé de l'invention permet ainsi à partir d'une mesure de six points de déterminer avec précision une valeur en temps réel de la fréquence de résonance d'un résonateur intégré à un capteur passif interrogeable à distance.

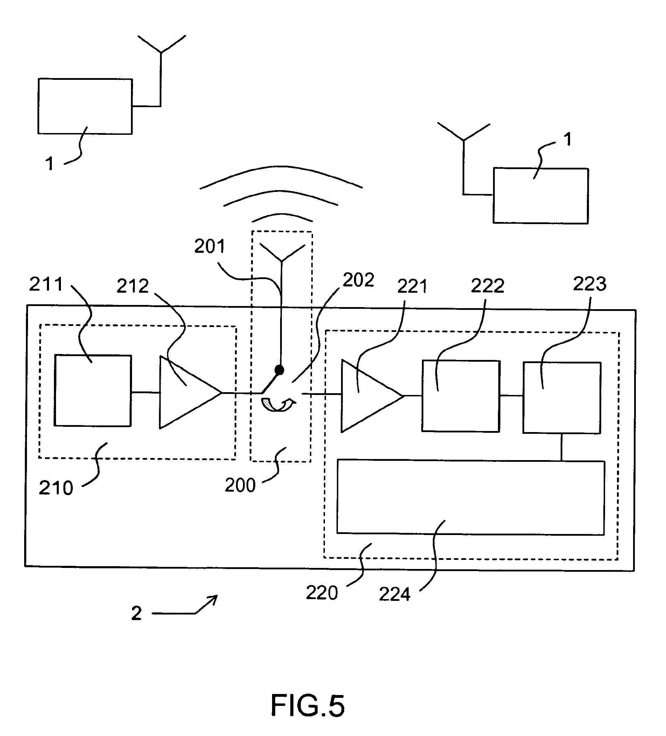

La figure 5 illustre un exemple de dispositif permettant d'implémenter le procédé d'interrogation à distance de l'invention.

Le dispositif électronique d'interrogation à distance comprend au moins :

- un premier ensemble électronique de génération de signaux radiofréquences 210;

- un second ensemble électronique de traitement de signaux radiofréquences 220 ;

- un ensemble d'émission/réception 200 des signaux radiofréquences comprenant une antenne commune 201 dite d'émission/réception et des moyens électroniques de commande 202 ;

- et au moins un résonateur 1.

Le premier ensemble électronique de génération de signal 210 comprend des moyens électroniques de synthèse de fréquence 211 et des moyens électroniques d'amplification 212. Les moyens électroniques 211 permettant de générer un signal à une fréquence d'émission variable située dans la bande spectrale du résonateur. La synthèse de fréquence couvre la bande de fréquence de l'application visée avec un pas de $\Delta f_{0s} /3$.

Le signal radiofréquence généré peut être modulé en amplitude, la modulation d'amplitude étant à une fréquence d'émission variable située dans la bande spectrale du transpondeur. A titre d'exemple, la mise en forme temporelle du signal d'émission peut être une porteuse modulée en amplitude à 100 % de type « OOK », acronyme anglo-saxon signifiant « On-Off Keying ».

La durée T de l'impulsion émise est suffisamment longue pour permettre à la réponse du résonateur SAW d'atteindre son régime stationnaire en fin d'émission. Ainsi, en fin d'interrogation, la réponse du résonateur équivaut à sa réponse harmonique. Par conséquent, la durée T est sensiblement supérieure au rapport du coefficient de surtension Q du résonateur sur sa fréquence centrale $f_0$. En pratique, on choisit la durée T telle que T soit supérieure à $3Q/\pi f_0$. Par exemple, pour une fréquence de 433 mégaHertz, prise dans la bande ISM et pour un coefficient de surtension Q de 5000, la durée T doit être supérieure à 11 microsecondes.

Le premier ensemble électronique de génération de signaux radiofréquences 210 et le second ensemble électronique de réception de signaux radiofréquences 220 ont une antenne commune 201 dite d'émission/réception et des moyens électroniques de commande 202 permettant de guider le signal du premier ensemble électronique de génération de signaux vers ladite antenne 201 et de guider le signal de réception de ladite antenne vers le second ensemble électronique de réception et de traitement 220. La commande est symbolisée sur la figure 5 par une flèche semi-circulaire.

Le second ensemble électronique de réception de signaux radiofréquences 220 comporte des moyens d'amplification et de détection d'amplitude du signal reçu 221, des moyens d'échantillonnage 222 et des moyens de traitement électroniques 224 permettant de déterminer l'amplitude. On a donc seulement besoin de connaître la puissance reçue pour chaque fréquence émise des signaux reçus. Le second ensemble électronique de réception 220 de signaux radiofréquences peut comporter également au moins un convertisseur analogique/numérique 223 permettant d'assurer le traitement numérique du signal. Le traitement des données est réalisé de façon numérique et ce grâce à un micro-contrôleur. Il est à noter que tout micro-contrôleur assurant une multiplication et une division sur 32 bits permet d'implémenter l'algorithme nécessaire au procédé d'interrogation de l'invention.

Nous allons décrire ci-après une application dans laquelle un capteur passif est intégré à une roue et plus précisément au pneumatique d'une roue dont on veut pouvoir évaluer la température d'échauffement et/ou la pression dudit pneumatique. Typiquement, dans le cas d'une roue en mouvement, pour une rotation à 3000 tours/min et un angle de vision de 60 degrés, le temps de vision est de 3,3 ms. Il est nécessaire, dans cet intervalle de temps, d'interroger tous les pics de résonance du capteur SAW. Dans le cas d'un balayage de 64 points/pic (cas typique compte tenu des facteurs de qualité courants de 8000 à 433 MHz), il faut un temps de 26 $\mu$s qui est inférieur au temps d'émission de l'onde radiofréquence pour que son encombrement spectral soit inférieur à la largeur de bande à mi-hauteur du résonateur. L'objectif visé avec le procédé d'interrogation de l'invention est d'effectuer le moins de mesures possibles afin de pouvoir interroger des capteurs circulant brièvement devant l'antenne de l'interrogateur.

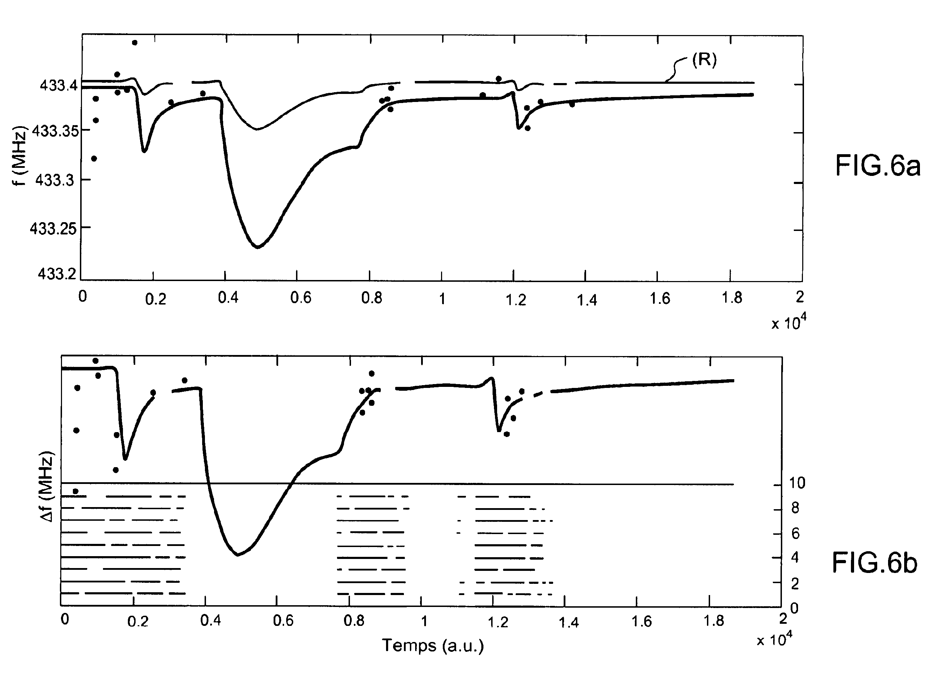

Pour valider le procédé d'interrogation de l'invention, un capteur passif comportant au moins un résonateur est positionné dans une roue de 12 cm de rayon tournant à une vitesse de 3000 tours/minute. L'un des résonateurs sert de référence. L'objectif de la référence est de subir les mêmes contraintes/effets de l'environnement que le résonateur de mesure, donc le résonateur de référence est placé au plus près du résonateur de mesure : dans le cas présent, ils sont tous deux placés dans le même composant. Des mesures ont été effectuées selon un procédé classique d'interrogation et selon le procédé de l'invention. Les résultats de ces mesures sont illustrés en figure 6. La figure 6a présente les mesures brutes des deux résonances d'un capteur de température - le pic de référence noté R situé en haut et le pic de mesure situé en bas -- sur une roue en rotation à 3000 tours/min (temps 0-30000, 78000 à 95000, 115000 à 135000) ou non. Nous ne constatons pas, sur la figure 6b, qui donne la différence entre fréquence de référence et fréquence de mesure, de variation notable de variance de la mesure selon que le capteur est en rotation ou à l'arrêt. L'algorithme proposé permet donc de maintenir le nombre de moyennes (ici 10) garantissant la variance de la mesure, ici inférieure au degré C. La même mesure avec un algorithme de balayage sur 2x32 points détériore considérablement le nombre de moyennes effectuées lorsque la roue est en rotation, augmentant donc la variance sur la température mesurée.

Les mesures sont effectuées avec une largeur de bande ISM de 1,9 MHz divisée en 128 points qui est la puissance de 2 qui se rapproche le plus du tiers largeur de bande du résonateur dont le facteur de qualité est 8000. On obtient une précision de mesure meilleure que le kHz.

**Revendications**

1. Procédé d'interrogation d'un capteur passif comportant au moins un résonateur piézoélectrique ayant une fréquence de résonance caractéristique et comprenant l'interrogation de ladite fréquence de résonance dudit résonateur **caractérisé en ce qu'**il comporte les étapes suivantes :

   - l'identification de la largeur caractéristique de la bande de fréquence de résonance du résonateur $\Delta f_{0S}$ ;
   - la détermination d'un pas de balayage égal au tiers de la largeur de bande mesurée $\Delta f = \Delta f_{0S}/3$ ;
   - une première série de trois mesures d'interrogation avec des signaux respectivement $((Y_1, f_1), (Y_2, f_2), (Y_3, f_3))$ à une première fréquence $(f_1)$, à une seconde fréquence $(f_2)$ et à une troisième fréquence $(f_3)$ permettant de définir une première valeur de résonance $(Y_1)$, une seconde valeur $(Y_2)$ de résonance et une troisième valeur de résonance $(Y_3)$ ;
   - la détermination par une opération de fit parabolique de la courbe de réponse de résonateur à partir desdites première, seconde et troisième valeurs de résonance, de manière à calculer une première valeur de la fréquence en temps réel $(f_{01})$ du résonateur.

**2.** Procédé d'interrogation d'un capteur passif selon la revendication 1, **caractérisé en ce que** le pas de balayage est constant et que la valeur de la fréquence du résonateur est définie par l'équation suivante :

$$f_0 = f_2 + \Delta f / 2.(Y_1 - Y_3) /(Y_1 + Y_3 - 2Y_2)$$

**3.** Procédé d'interrogation d'un capteur passif selon l'une des revendications 1 ou 2, **caractérisé en ce que** la première série de mesures d'interrogation est effectuée à trois fréquences telles que les première, seconde et troisième valeurs de résonance définissent un triangle isocèle.

**4.** Procédé d'interrogation d'un capteur passif selon l'une des revendications 1 à 3, **caractérisé en ce qu'**il comprend en outre une seconde étape itérative de mesures d'interrogation à une quatrième fréquence ($f_4$), une cinquième fréquence ($f_5$) et sixième fréquence ($f_6$) définies respectivement par les équations suivantes :

$$f_4 = f_{01} - \Delta f$$

$$f_5 = f_{01}$$

$$f_6 = f_{01} + \Delta f$$

de manière à affiner une seconde valeur de fréquence en temps réel ($f_{02}$).

**5.** Dispositif électronique d"interrogation d'un capteur passif comportant au moins un résonateur piézoélectrique, ledit dispositif comprenant au moins un premier ensemble de génération de signaux radiofréquences, un second ensemble électronique de traitement de signaux radiofréquences et au moins un capteur passif **caractérisé en ce que** le second ensemble de traitement de signaux radiofréquences comporte un micro-contrôleur mettant en oeuvre le procède d'interrogation selon l'une des revendications 1 à 4.

**6.** Dispositif électronique d'interrogation d'un capteur passif selon la revendication 5, **caractérisé en ce qu'**il comporte en outre un convertisseur analogique/numérique .

**7.** Utilisation d'un dispositif électronique selon l'une des revendications 5 ou 6, pour l'interrogation d'un capteur passif intégré à un système mis en rotation.

**8.** Dispositif électronique d'interrogation selon l'une des revendications 5 ou 6, **caractérisé en ce que** le capteur passif étant intégré à une roue et comprenant au moins un résonateur, il comprend des moyens pour déterminer la température de la roue à partir de la mesure de la fréquence de résonance en temps réel dudit résonateur.

**9.** Dispositif électronique d'interrogation selon l'une des revendications 5 ou 6, **caractérisé en ce que** la capteur passif étant intégré à une roue et comprenant au moins un résonateur, il comprend des moyens pour déterminer la pression de la roue à partir de la mesure de la fréquence de résonance en temps réel dudit résonateur.

**Patentansprüche**

**1.** Verfahren zum Abfragen eines passiven Sensors, der wenigstens einen piezoelektrischen Resonator mit einer charakteristischen Resonanzfrequenz aufweist, das das Abfragen der Resonanzfrequenz des Resonators beinhaltet, **dadurch gekennzeichnet, dass** es die folgenden Schritte beinhaltet:

- Identifizieren der charakteristischen Breite des Resonanzfrequenzbandes des Resonators $\Delta f_{0S}$;
- Ermitteln einer Abtastteilung, die gleich einem Drittel der gemessenen Bandbreite $\Delta f = \Delta f_{0S}/3$ ist;
- eine erste Serie von drei Abfragemessungen jeweils mit Signalen (($Y_1,f_1$), ($Y_2,f_2$), ($Y_3,f_3$)) auf einer ersten Frequenz ($f_1$), einer zweiten Frequenz ($f_2$) und einer dritten Frequenz ($f_3$), die die Definition eines ersten Reso-

nanzwertes ($Y_1$), eines zweiten Resonanzwertes ($Y_2$) und eines dritten Resonanzwertes ($Y_3$) zulässt;
- Ermitteln, mit einem parabolischen Fitting-Vorgang, der Resonatorantwortkurve auf der Basis des ersten, zweiten und dritten Resonanzwertes, um einen ersten Wert der Echtzeitfrequenz ($f_{01}$) des Resonators zu berechnen.

2. Verfahren zum Abfragen eines passiven Sensors nach Anspruch 1, **dadurch gekennzeichnet, dass** die Abtastteilung konstant ist, und dadurch, dass der Wert der Resonatorfrequenz durch die folgende Gleichung definiert wird:

$$f_0 = f_2 + \Delta f/2.(Y_1 - Y_3)/(Y_1 + Y_3 - 2Y_2).$$

3. Verfahren zum Abfragen eines passiven Sensors nach Anspruch 1 oder 2, **dadurch gekennzeichnet, dass** die erste Serie von Abfragemessungen auf drei Frequenzen erfolgt, so dass der erste, zweite und dritte Resonanzwert ein gleichschenkliges Dreieck definieren.

4. Verfahren zum Abfragen eines passiven Sensors nach einem der Ansprüche 1 bis 3, **dadurch gekennzeichnet, dass** es ferner einen zweiten iterativen Abfragemessschritt auf einer vierten Frequenz ($f_4$), einer fünften Frequenz ($f_5$) und einer sechsten Frequenz ($f_6$) beinhaltet, die durch die folgenden jeweiligen Gleichungen definiert werden:

$$f_4 = f_{01} - \Delta f;$$

$$f_5 = f_{01};$$

$$f_6 = f_{01} + \Delta f;$$

um einen zweiten Frequenzwert ($f_{02}$) in Echtzeit zu verfeinern.

5. Elektronisches Gerät zum Abfragen eines passiven Sensors, der wenigstens einen piezoelektrischen Resonator aufweist, wobei das Gerät wenigstens eine erste Baugruppe zum Erzeugen von Funkfrequenzsignalen, eine zweite elektronische Baugruppe zum Verarbeiten von Funkfrequenzsignalen und wenigstens einen passiven Sensor umfasst, **dadurch gekennzeichnet, dass** die zweite Baugruppe zum Verarbeiten von Funkfrequenzsignalen eine Mikrosteuerung umfasst, die das Abfrageverfahren nach einem der Ansprüche 1 bis 4 ausführt.

6. Elektronisches Gerät zum Abfragen eines passiven Sensors nach Anspruch 5, **dadurch gekennzeichnet, dass** es ferner einen Analog-Digital-Wandler umfasst.

7. Verwendung eines elektronischen Gerätes nach Anspruch 5 oder 6 zum Abfragen eines in ein Rotationssystem integrierten passiven Sensors.

8. Elektronisches Gerät zum Abfragen nach Anspruch 5 oder 6, **dadurch gekennzeichnet, dass** der passive Sensor, wenn er in ein Rad integriert ist und wenigstens einen Resonator umfasst, Mittel zum Ermitteln der Temperatur des Rades auf der Basis der Messung der Resonanzfrequenz des Resonators in Echtzeit umfasst.

9. Elektronisches Gerät zum Abfragen nach Anspruch 5 oder 6, **dadurch gekennzeichnet, dass** der passive Sensor, wenn er in ein Rad integriert ist und wenigstens einen Resonator umfasst, Mittel zum Ermitteln des Drucks des Rades auf der Basis der Messung der Resonanzfrequenz des Resonators in Echtzeit umfasst.

**Claims**

1. A method for polling a passive sensor having at least one piezoelectric resonator with a characteristic resonant frequency, including the polling of said resonant frequency of said resonator, **characterised in that** it comprises the following steps:

- identifying the characteristic width of the resonant frequency band of said resonator $\Delta f_{0S}$;
- determining a scanning pitch equal to one third of the measured band width $\Delta f = \Delta f_{0S}/3$;
- a first series of three polling measurements using signals $((Y_1,f_1), (Y_2,f_2), (Y_3,f_3))$ at a first frequency $(f_1)$, at a second frequency $(f_2)$ and at a third frequency $(f_3)$, respectively, allowing the definition of a first resonant value $(Y_1)$, a second resonant value $(Y_2)$ and a third resonant value $(Y_3)$;
- determining, using a parabolic fitting operation, the resonator response curve on the basis of said first, second and third resonant values so as to calculate a first value of the real time frequency $(f_{01})$ of said resonator.

2. The method for polling a passive sensor according to claim 1, **characterised in that** said scanning pitch is constant, and **in that** the value of the resonator frequency is defined by the following equation:

$$f_0 = f_2 + \Delta f/2.(Y_1-Y_3)/(Y_1+Y_3-2Y_2).$$

3. The method for polling a passive sensor according to claim 1 or 2, **characterised in that** the first series of polling measurements is carried out at three frequencies such that the first, second and third resonant values define an isosceles triangle.

4. The method for polling a passive sensor according to any one of claims 1 to 3, **characterised in that** it further comprises a second iterative step of polling measurements at a fourth frequency $(f_4)$, a fifth frequency $(f_5)$ and a sixth frequency $(f_6)$ defined by the following equations, respectively:

$$f_4 = f_{01} - \Delta f;$$

$$f_5 = f_{01};$$

$$f_6 = f_{01} + \Delta f;$$

so as to refine a second real time frequency value $(f_{02})$.

5. An electronic device for polling a passive sensor having at least one piezoelectric resonator, said device comprising at least one first assembly for generating radiofrequency signals, a second electronic assembly for processing radiofrequency signals and at least one passive sensor, **characterised in that** said second assembly for processing radiofrequency signals comprises a micro-controller implementing the polling method according to any one of claims 1 to 4.

6. The electronic device for polling a passive sensor according to claim 5, **characterised in that** it further comprises an analogue/digital converter.

7. The use of an electronic device according to claim 5 or 6 for polling a passive sensor integrated in a system that rotates.

8. The electronic device for polling according to claim 5 or 6, **characterised in that**, with said passive sensor being integrated in a wheel and comprising at least one resonator, it comprises means for determining the temperature of said wheel on the basis of the real time measurement of the resonant frequency of said resonator.

9. The electronic device for polling according to claim 5 or 6, **characterised in that**, with said passive sensor being integrated in a wheel and comprising at least one resonator, it comprises means for determining the pressure of said wheel on the basis of the real time measurement of the resonant frequency of said resonator.

FIG.1

FIG.2

FIG.3a

FIG.3b

FIG.4

FIG.5

FIG.6a

FIG.6b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005056098 A
- WO 9320422 A
- US 200612913 B